# EUROPEAN PATENT SPECIFICATION

(11) **EP 2 199 677 B1**
(45) Date of publication and mention of the grant of the patent: **18.06.2014**
(21) Application number: 09015314.9
(22) Date of filing: 10.12.2009
(51) Int. Cl.: F23L 15/02, F23D 14/66

(54) **Combustion control method for regenerative-combustion heat treat furnace**
Verbrennungssteuerverfahren für einen regenerativen Verbrennungsofen mit Wärmebehandlung
Procédé de contrôle de combustion pour four à traitement thermique à combustion régénérative

(30) Priority: 11.12.2008 JP 2008315510
(43) Date of publication of application: 23.06.2010
(73) Proprietor: Chugai Ro Co., Ltd., Chuo-ku Osaka-shi, Osaka (JP)
(72) Inventor: Kimoto, Yasuyuki, Osaka-shi Osaka (JP)
(74) Representative: Glawe, Delfs, Moll

(56) References cited:
- JP-A- 7 280 461
- JP-A- 10 047 664
- JP-A- 10 073 213

## Description

### [Technical Field]

The present invention relates to a regenerative-combustion heat treat furnace which is provided with plural pairs of regenerative burners arranged in a moving direction of a subject material in the heat treat furnace, the regenerative burner including a burner portion equipped with a fuel injection nozzle and a regenerator accommodating a heat storage material therein. Each pair of regenerative burners alternates between the following operations as follows. One regenerative burner of each pair performs combustion by introducing a combustion air to the burner portion via the regenerator and injecting a fuel gas from the fuel injection nozzle of this burner portion. On the other hand, the other regenerative burner performs an operation of introducing a combustion exhaust gas into the regenerator accommodating the heat storage material and allowing the heat storage material to store heat from the combustion exhaust gas before discharging the combustion exhaust gas. Particularly, the invention is characterized by providing control as follows. At least one pair of regenerative burners is controlled by switching the paired regenerative burners between combustion and combustion stop according to a combustion load and the like in the heat treat furnace. When the combustion is restarted after the combustion stop, the drop of flame temperature in the regenerative burner is suppressed.

### [Background Art]

The regenerative-combustion heat treat furnace has heretofore been used for heat treating the subject material. The heat treat furnace is provided with plural pairs of regenerative burners arranged in the moving direction of the subject material in the heat treat furnace, the regenerative burner including the burner portion equipped with the fuel injection nozzle and the regenerator accommodating the heat storage material therein. Each pair of regenerative burners alternates between the operations in a manner such that one regenerative burner of the pair performs the combustion by introducing the combustion air to the burner portion via the regenerator and injecting the fuel gas from the fuel injection nozzle of this burner portion while the other regenerative burner performs the operation of introducing the combustion exhaust gas into the regenerator accommodating the heat storage material and allowing the heat storage material to store the heat from the combustion exhaust gas before discharging the combustion exhaust gas.

It is noted here that it is necessary for such a regenerative-combustion heat treat furnace to vary the combustion load therein depending upon the type or size of the subject material or upon the purpose of treatment.

As disclosed in Japanese Unexamined Patent Publication No.H8-35623 and Japanese Patent Publication No.3562142, a combustion control method for regenerative-combustion heat treat furnace has heretofore been proposed wherein the combustion and the combustion stop of some paired regenerative burners located at suitable positions in the heat treat furnace are controlled properly (thin-out control) according to the combustion load in the heat treat furnace.

It is noted here that the following problem exists in controlling the combustion and the combustion stop of the paired regenerative burners according to the combustion load. If stop time is prolonged, the heat of the heat storage material accommodated in the regenerator of each de-actuated regenerative burner is released into the heat treat furnace or conducted to a wall of the regenerator so as to be released to the outside of the heat treat furnace. Hence, the heat storage material is lowered in temperature.

In a case where the combustion is restarted in the regenerative burner with the heat storage material lowered in temperature, therefore, the combustion air introduced to the burner portion via the regenerator is lowered in temperature and hence, the flame temperature in this regenerative burner is lowered. This leads to an inhomogeneous temperature distribution in the heat treat furnace, which becomes unable to perform a proper heat treatment on the subject material.

A burner comprising a plurality of heat storage regeneration type burners adapted to repeat intermittent combustion at a fixed cycle is disclosed in JP 10 073213 A. Combustion is performed sequentially varying the combustion continuation time within each cycle of each burner according to a required temperature of the furnace. It is disclosed to exhaust from non-combustion burners while one burner performs combustion.

A furnace pressure controlling method for heating a furnace is disclosed in JP 7 280461 A. The method comprises regulating a flow valve provided at an exhaust gas channel from a thermal storage type burner in order to achieve a constant furnace pressure.

A furnace with a temperature inclination in the longitudinal direction of the furnace is disclosed in JP 10 047664 A. The temperature inclination is achieved by providing multiple burner devices having different combustion switching cycles.

### [Disclosure of the Invention]

### [Problem to Be Solved by the Invention]

The invention addresses the above-described problem encountered by the regenerative-combustion heat treat furnace which is provided with the plural pairs of regenerative burners arranged in the moving direction of the subject material in the heat treat furnace, the regenerative burner including the burner portion equipped with the fuel injection nozzle and the regenerator accommodating the heat storage material therein and in which each pair of regenerative burners alternates between the operations in a manner such that one regenerative burner of the pair performs the combustion by introducing the combustion air to the burner portion via the regenerator and injecting the fuel gas from the fuel injection nozzle of this burner portion while the other regenerative burner introduces the combustion exhaust gas into the regenerator accommodating the heat storage material and allows the heat storage material to store the heat from the combustion exhaust gas before discharging the combustion exhaust gas.

In the above-described regenerative-combustion heat treat furnace, the invention seeks to achieve the following object in conjunction with properly controlling the combustion and the combustion stop of some paired regenerative burners located at suitable positions in the heat treat furnace. That is, even in the case where the stop time for the paired regenerative burners is prolonged, the invention suppresses the temperature drop of the heat storage material accommodated in the regenerators of the paired regenerative burners. Hence, the flame temperature in each of the paired regenerative burners is not lowered when the combustion is restarted. The heat treat furnace has a homogeneous temperature distribution so as to be able to perform the proper heat treatment on the subject material.

### [Means for Solving the Problem]

In accordance with the invention, the above object is accomplished in a combustion control method for a regenerative-combustion heat treat furnace as defined in claim 1.

There is a fear of lowering pressure in the heat treat furnace if the operation of introducing the combustion exhaust gas into the regenerator accommodating the heat storage material and allowing the heat storage material to store the heat from the combustion exhaust gas before discharging the exhaust gas is performed in the regenerative burner wherein the combustion is stopped as described above. It is therefore preferred for the regenerative burner in the combustion stop state to restrict the amount of combustion exhaust gas introduced into the regenerator accommodating the heat storage material. It is particularly preferred to control the amount of combustion exhaust gas introduced into the regenerator accommodating the heat storage material according to the pressure in the heat treat furnace. In a case where the number of regenerative burners placed in the combustion stop state is increased, for example, it is preferred that the regenerative burners in the combustion stop state reduce the amount of combustion exhaust gas introduced into the regenerators accommodating the heat storage material.

### [Advantageous Effects of the Invention]

In the combustion control method for regenerative-combustion heat treat furnace according to the invention, while at least one pair of regenerative burners is controlled by switching the paired regenerative burners between the combustion and the combustion stop, the operation of introducing the combustion exhaust gas into the regenerator accommodating the heat storage material and allowing the heat storage material to store the heat from the combustion exhaust gas before discharging the combustion exhaust gas is performed in at least one regenerative burner of the pair even during the combustion stop. Even if the stop time is prolonged, therefore, the temperature drop of the heat storage material accommodated in the regenerator of the regenerative burner in the combustion stop state is suppressed.

Accordingly, even in a case where the combustion is restarted in the regenerative burner the stop time of which is prolonged, the drop of flame temperature in this regenerative burner is suppressed. Hence, the heat treat furnace has the homogeneous temperature distribution so as to be able to perform the proper heat treatment on the subject material.

Just as described, the operation of introducing the combustion exhaust gas into the regenerator accommodating the heat storage material and allowing the heat storage material to store the heat from the combustion exhaust gas before discharging the combustion exhaust gas is performed even when the combustion in the paired regenerative burners is stopped. It is advantageous if such an operation is performed only in the regenerative burner which performs the combustion, at the restart of combustion, by introducing the combustion air to the burner portion via the regenerator and injecting the fuel gas from the fuel gas injection nozzle of this burner portion. In the regenerative burner which performs the combustion, the temperature drop of the heat storage material accommodated in the regenerator is suppressed as described above and hence, the drop of flame temperature is suppressed. Furthermore, in the regenerative burner which, at the restart of combustion, introduces the combustion exhaust gas into the regenerator accommodating the heat storage material and allows the heat storage material to store the heat from the combustion exhaust gas before discharging the combustion exhaust gas, the heat storage material in the regenerator is prevented from being heated excessively.

As described above, the operation of introducing the combustion exhaust gas into the regenerator accommodating the heat storage material and allowing the heat storage material to store the heat from the combustion exhaust gas before discharging the exhaust gas is performed in the regenerative burner placed in the combustion stop state. During this operation, if the amount of combustion exhaust gas introduced into the regenerator of the regenerative burner is controlled according to the pressure in the heat treat furnace, the pressure drop in the heat treat furnace is also suppressed so that the furnace can perform the proper heat treatment on the subject material.

These and other objects, advantages and features of the invention will become apparent from the following description thereof taken in conjunction with the accompanying drawings.

### [Best Modes for Carrying Out the Invention]

A combustion control method for regenerative-combustion heat treat furnace according to an embodiment of the invention will be specifically described as below with reference to the accompanying drawings. It is to be noted that the combustion control method for regenerative-combustion heat treat furnace according to the invention is not particularly limited to the embodiments disclosed hereinbelow but may be embodied in any other suitable forms without departing from the spirit or essential characteristics thereof.

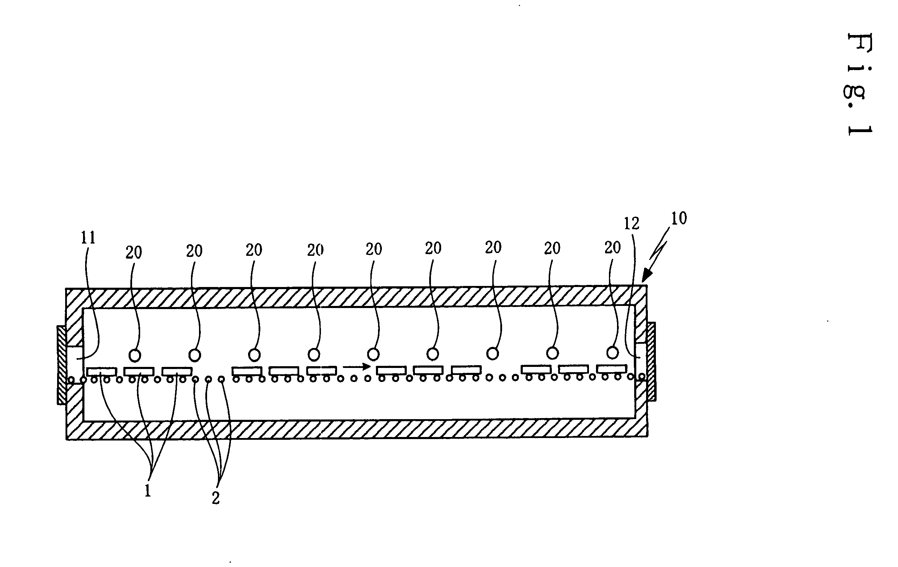

According to the embodiment, as shown in Fig.1, a subject material 1 formed of a steel material is introduced into a heat treat furnace 10 through an inlet 11 of the heat treat furnace 10. The subject material is heat treated while being transported by transport rollers 2 through the heat treat furnace 10. The subject material 1 thus heat treated is taken out of the heat treat furnace 10 through an outlet 12 of the heat treat furnace 10.

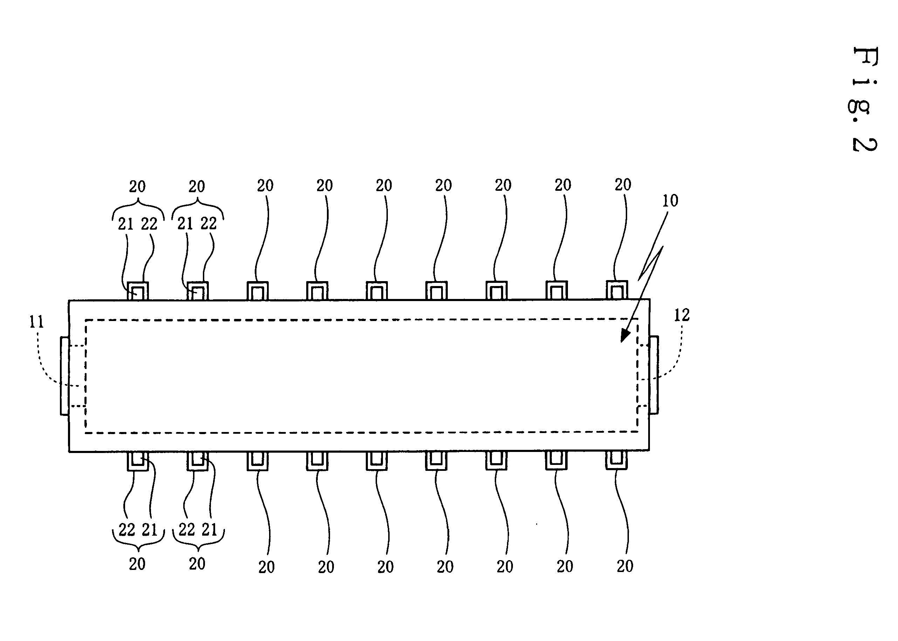

According to the embodiment, as shown in Fig.2, a pair of regenerative burners 20, each including a burner portion 21 and a regenerator 22, is disposed in face-to-face relation. In the above heat treat furnace 10, plural pairs of regenerative burners 20 are arranged in a moving direction of the subject material 1.

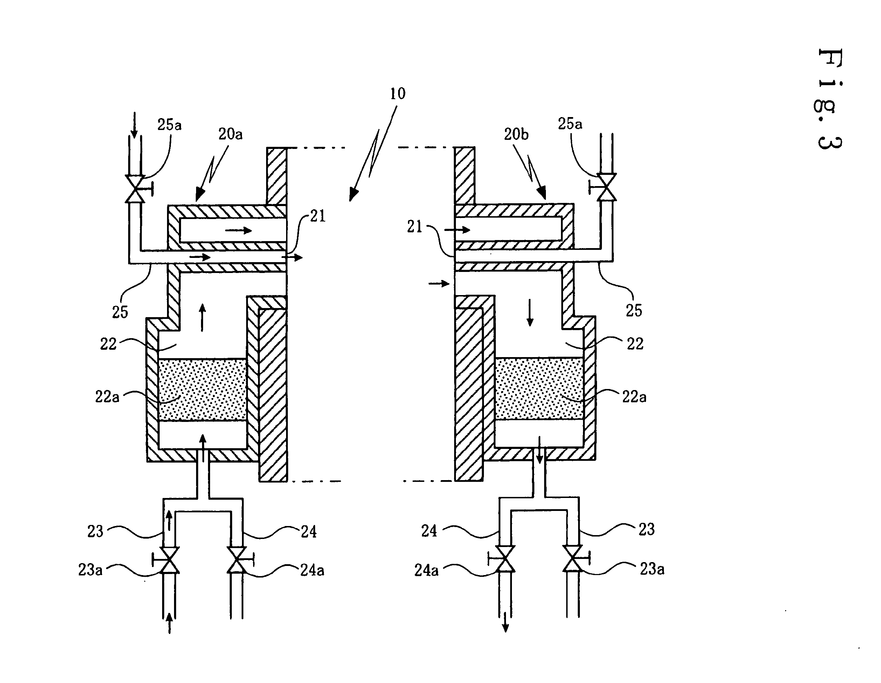

In the pair of regenerative burners 20, operations are performed as follows. In one regenerative burner 20a of the pair, as shown in Fig.3, an air feeding valve 23a disposed in an air feed pipe 23 is opened. The air feed pipe 23 serves to feed a combustion air into the regenerator 22 accommodating a heat storage material 22a therein. On the other hand, a gas discharging valve 24a disposed in an exhaust gas discharge pipe 24 is closed. The exhaust gas discharge pipe 24 serves to discharge a combustion exhaust gas through the regenerator 22. The combustion air introduced into the regenerator 22 through the air feed pipe 23 is heated by means of the heat storage material 22a accommodated in the regenerator 22. The combustion air thus heated is fed to the burner portion 21, while a fuel gas is injected from a fuel injection nozzle 25 by opening a gas feeding valve 25a for feeding the fuel gas to the fuel injection nozzle 25 disposed at the burner portion 21. Thus, the fuel gas is combusted in the heat treat furnace 10.

In the other regenerative burner 20b, on the other hand, the combustion is disabled by closing the gas feeding valve 25a for feeding the fuel gas to the fuel injection nozzle 25 and the air feeding valve 23a disposed in the air feed pipe 23. In the meantime, the gas discharging valve 24a disposed in the exhaust gas discharge pipe 24 is opened. The exhaust gas discharging pipe serves to discharge the combustion exhaust gas through the regenerator 22. The combustion exhaust gas resulting from the combustion in the heat treat furnace 10 is sucked into the regenerator 22 so as to allow the heat storage material 22a accommodated in the regenerator 22 to store the heat from the combustion exhaust gas. Subsequently, the combustion exhaust gas is discharged to the outside via the exhaust gas discharge pipe 24.

In each pair of regenerative burners 20 described above, the one regenerative burner 20a performs the combustion by injecting the fuel gas from the fuel injection nozzle 25 while the other regenerative burner 20b introduces the combustion exhaust gas into the regenerator 22 and allows the heat storage material 22a to store the heat from the combustion exhaust gas before discharging the combustion exhaust gas. These regenerative burners are switched between these operations.

In a case where the type, size or the like of the subject material 1 to be heat treated in the heat treat furnace 10 is changed so that the combustion load in the heat treat furnace 10 is varied, some paired regenerative burners 20 located at suitable positions are controlled by switching the paired regenerative burners between the combustion and the combustion stop.

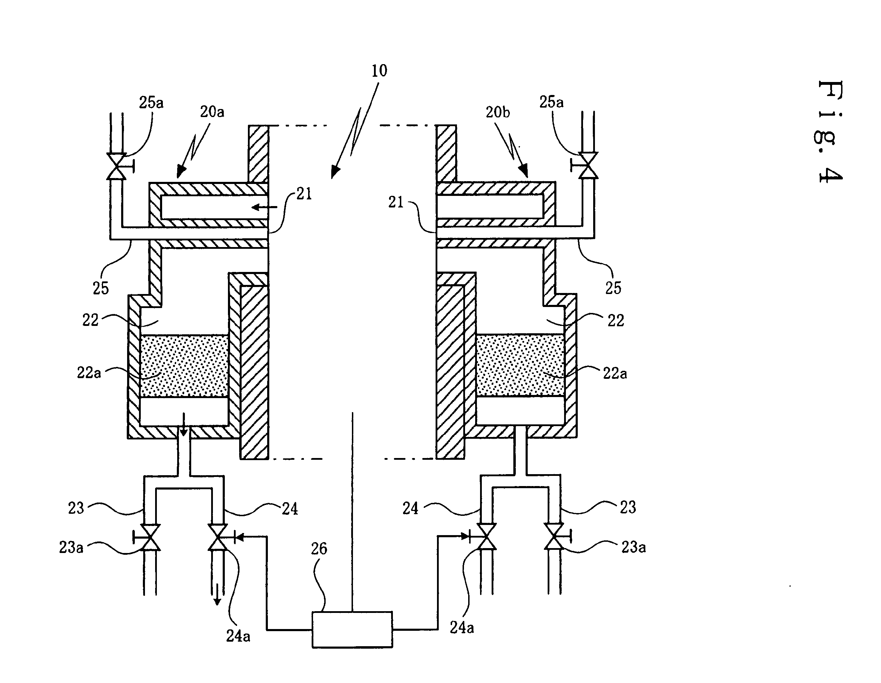

According to the combustion control method for regenerative-combustion heat treat furnace of the embodiment, the combustion in the pair of regenerative burners 20a, 20b is stopped as follows. As shown in Fig.4, the air feeding valve 23a and gas feeding valve 25a of each of the regenerative burners 20a, 20b are closed to cut off the supply of combustion air and fuel gas whereby the combustion is stopped.

In the one regenerative burner 20a which combusts the fuel gas at the restart of combustion by feeding the combustion air to the burner portion 21 and injecting the fuel gas from the fuel gas injection nozzle 25, as shown in Fig.3, the following operation is performed. The gas discharging valve 24a disposed in the exhaust gas discharge pipe 24 for discharging the combustion exhaust gas through the regenerator 22 is opened so as to allow the heat storage material 22a accommodated in the regenerator 22 to store the heat from the combustion exhaust gas even when the regenerative burner is in a combustion stop state. On the other hand, in the other regenerative burner 20b which does not perform the combustion at the restart of combustion but sucks into the regenerator 22 the combustion exhaust gas resulting from the combustion in the heat treat furnace 10 so as to allow the heat storage material 22a accommodated in the regenerator 22 to store the heat from the combustion exhaust gas, as shown in Fig.3, the following operation is performed. The gas discharging valve 24a disposed in the exhaust gas discharge pipe 24 for discharging the combustion exhaust gas is closed to inhibit the introduction of the combustion exhaust gas into the regenerator 22 so that the heat from the combustion exhaust gas is not stored in the heat storage material 22a accommodated in the regenerator 22.

In the state where the combustion is stopped in this manner, the one regenerative burner 20a to perform the combustion at the restart of combustion opens the gas discharging valve 24a and allows the heat storage material 22a accommodated in the regenerator 22 to store the heat from the combustion exhaust gas. According to this embodiment, pressure detecting means 26 controls the aperture of the above gas discharging valve 24a while detecting the pressure in the heat treat furnace 10. In a case where the pressure in the heat treat furnace 10 is lowered, the aperture of the gas discharging valve 24a is reduced so as to maintain the inside of the heat treat furnace 10 at a predetermined pressure.

This approach ensures that the inside of the heat treat furnace 10 is maintained at the predetermined pressure even if the stop time is prolonged. In the one regenerative burner 20a which performs the combustion at the restart of combustion, the combustion exhaust gas is introduced into the regenerator 22 to suppress the temperature drop of the heat storage material 22a accommodated in the regenerator 22. When the regenerative burner 20a restarts the combustion, the regenerative burner 20a does not experience the drop of flame temperature so that the heat treat furnace 10 has the homogeneous temperature distribution and is capable of performing a proper heat treatment on the subject material 1. On the other hand, in the other regenerative burner 20b which does not perform the combustion at the restart of combustion, the heat storage material 22a is prevented from being excessively heated when the combustion exhaust gas in the heat treat furnace 10 is introduced into the regenerator 22 to allow the heat storage material 22a to store the heat from the combustion exhaust gas.

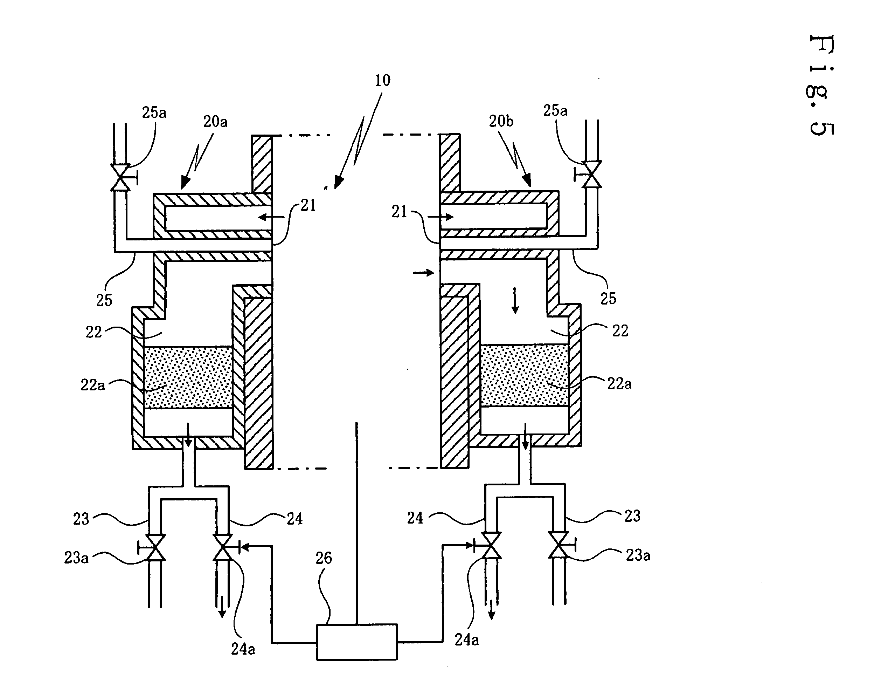

In the case where the combustion in the paired regenerative burners 20a, 20b is stopped, the embodiment is arranged such that the one regenerative burner 20a alone, which performs the combustion at the restart of combustion, opens the gas discharging valve 24a and allows the heat storage material 22a accommodated in the regenerator 22 to store the heat from the combustion exhaust gas even though the regenerative burner is in the combustion stop state. As shown in Fig.5, however, the other regenerative burner 20b which does not perform the combustion at the restart of combustion may also perform the operation just as the one regenerative burner 20a described above so long as the heat storage material 22a is not heated excessively. That is, the other regenerative burner 20b may open the gas discharging valve 24a and allow the heat storage material 22a accommodated in the regenerator 22 to store the heat from the combustion exhaust gas even though the regenerative burner is in the combustion stop state.

This embodiment employs the pressure detecting means 26 for controlling the aperture of the gas discharging valve 24a while detecting the pressure in the heat treat furnace 10. However, it is also possible to employ temperature detecting means (not shown) in place of this pressure detecting means 26. The temperature in the heat treat furnace 10 may be detected by means of the temperature detecting means such that if the temperature in the heat treat furnace 10 detected by the temperature detection means drops, the aperture of the gas discharging valve 24a may be reduced to maintain the inside of the heat treat furnace 10 at the predetermined pressure.

### [Brief Description of the Drawings]

[Fig.1] Fig.1 is a schematic sectional view showing an internal arrangement of a heat treat furnace providing control based on a combustion control method for regenerative-combustion heat treat furnace according to one embodiment of the invention;
[Fig.2] Fig.2 is a schematic plan view of the above heat treat furnace according to the above embodiment;
[Fig.3] Fig.3 is a schematic diagram illustrating how combustion is performed by a pair of regenerative burners of the above heat treat furnace according to the above embodiment;
[Fig.4] Fig.4 is a schematic diagram showing the embodiment and illustrating how pressure detecting means controls the aperture of a gas discharging valve in one of the above paired regenerative burners while detecting the pressure in the heat treat furnace in a case where the combustion in the pair of regenerative burners is stopped; and
[Fig.5] Fig.5 is a schematic diagram showing an exemplary modification of the above embodiment and illustrating how the pressure detecting means controls the aperture of the gas discharging valves of the above paired regenerative burners while detecting the pressure in the heat treat furnace in the case where the combustion in the pair of regenerative burners is stopped.

### [Reference Characters List]

1: Subject material, 2: Transport roller
10: Heat treat furnace, 11: Inlet, 12: Outlet
20, 20a, 20b: Regenerative burner
21: Burner portion
22: Regenerator, 22a: Heat storage material
23: Air feed pipe, 23a: Air feeding valve
24: Exhaust gas discharge pipe, 24a: Gas discharging valve
25: Fuel injection nozzle, 25a: Gas feeding valve
26: Pressure detecting means

## Claims

1. Combustion control method for a regenerative-combustion heat treat furnace (10) which is provided with plural pairs of regenerative burners (20) arranged in a moving direction of a subject material (1) in the heat treat furnace (10), the regenerative burner (20) including a burner portion (21) equipped with a fuel injection nozzle and a regenerator (22) accommodating a heat storage material (22a) therein and in which each pair (20a, 20b) of regenerative burners (20) alternates between operations in a manner such that one regenerative burner (20) of the pair performs combustion by introducing a combustion air to the burner portion (21) via the regenerator (22) and injecting a fuel gas from the fuel injection nozzle of this burner while the other regenerative burner (20) introduces a combustion exhaust gas into the regenerator (22) accommodating the heat storage material (22a) and allows the heat storage material to store heat from the combustion exhaust gas before discharging the combustion exhaust gas,
the combustion control method comprising the following operational steps when switching the at least one pair (20a, 20b) of regenerative burners (20) between combustion and combustion stop:
- introducing the combustion exhaust gas into the regenerator (22) accomodating the heat storage material (22a) and allowing the heat storage material (22a) to store the heat from the combustion exhaust gas before discharging the combustion exhaust gas, these steps being performed in that one regenerative burner (20) of the pair which performs the combustion at the restart of combustion by introducing the combustion air to the burner via the regenerator (22) and injecting the fuel gas from the fuel injection nozzle of this burner, even when the combustion in the burners of the regenerative burner pair is stopped,
- inhibiting the introduction of combustion exhaust gas into the regenerator (22) of the other burner (20) of the burner pair which does not perform combustion at the restart of combustion.

2. The combustion control method for regenerative-combustion heat treat furnace according to claim 1, wherein in conjunction with performing, even during the combustion stop, the operation of introducing the combustion exhaust gas into the regenerator (22) accommodating the heat storage material (22a) and allowing the heat storage material (22a) to store the heat from the combustion exhaust gas before discharging the combustion exhaust gas, the amount of combustion exhaust gas introduced into the regenerator (22) accommodating the heat storage material (22a) is restricted.

3. The combustion control method for regenerative-combustion heat treat furnace according to claim 1, wherein in conjunction with performing, even during the combustion stop, the operation of introducing the combustion exhaust gas into the regenerator (22) accommodating the heat storage material (22a) and allowing the heat storage material (22a) to store the heat from the combustion exhaust gas before discharging the combustion exhaust gas, the amount of combustion exhaust gas introduced into the regenerator (22) accommodating the heat storage material (22a) is controlled according to the pressure in the heat treat furnace.

## Patentansprüche

1. Verbrennungssteuerungsverfahren für einen regenerativ verbrennenden Wärmebehandlungsofen (10), der mit mehreren Paaren von regenerativen Brennern (20) versehen ist, die in einer Bewegungsrichtung eines Zielmaterials (1) in dem Wärmebehandlungsofen (10) angeordnet sind, wobei der regenerative Brenner (20) einen Brennerteil (21), der mit einer Brennmaterialeinspeisedüse versehen ist, und einen Regenerator (22), der darin ein Wärmespeicherungsmaterial (22a) aufnimmt, beinhaltet, und in dem jedes Paar (20a, 20b) regenerativer Brenner (20) derart zwischen Betriebszuständen alterniert, dass ein regenerativer Brenner (20) des Paares durch Einleiten einer Verbrennungsluft in den Brennerteil (21) über den Regenerator (22) und Einspeisen eines Brenngases aus der Brennmaterialeinspeisedüse dieses Brenners Verbrennung betreibt, während der andere regenerative Brenner (20) ein Verbrennungsabgas in den Regenerator (22), der das Wärmespeicherungsmaterial (22a) aufnimmt, einleitet und es dem Wärmespeicherungsmaterial ermöglicht, Wärme von dem Verbrennungsabgas vor dem Auslassen des Verbrennungsabgases zu speichern,
wobei das Verbrennungssteuerungsverfahren die folgenden Arbeitsschritte beim Umschalten des zumindest einen Paares (20a, 20b) regenerativer Brenner (20) zwischen Verbrennung und Verbrennungsstopp umfasst:
- Einleiten des Verbrennungsabgases in den Regenerator (22), der das Wärmespeicherungsmaterial (22a) aufnimmt, und es dem Wärmespeicherungsmaterial (22a) ermöglichen, die Wärme von dem Verbrennungsabgas vor dem Auslassen des Verbrennungsabgases zu speichern, wobei diese Schritte durch Einleiten der Verbrennungsluft in den Brenner über den Regenerator (22) und Einspeisen des Brenngases aus der Brennmaterialeinspeisedüse dieses Brenners in demjenigen regenerativen Brenner (20) des Paares ausgeführt wird, der die Verbrennung beim Wiederbeginn der Verbrennung ausführt, selbst wenn die Verbrennung in den Brennern des Paares regenerativer Brenner gestoppt ist,
- Verhindern des Einleitens von Verbrennungsabgas in den Regenerator (22) des anderen Brenners (20) des Brennerpaares, der eine Verbrennung beim Wiederbeginn der Verbrennung nicht ausführt.

2. Verbrennungssteuerungsverfahren für einen regenerativ verbrennenden Wärmebehandlungsofen gemäß Anspruch 1, wobei in Verbindung mit dem Ausführen des Einleitens des Verbrennungsabgases in den Regenerator (22), der das Wärmespeicherungsmaterial (22a) aufnimmt, und des es dem Wärmespeicherungsmaterial (22a) Ermöglichen, die Wärme von dem Verbrennungsabgas vor dem Auslassen des Verbrennungsabgases zu speichern, selbst während des Verbrennungsstopps, die Menge an Verbrennungsabgasen, die in den Regenerator (22), der das Wärmespeicherungsmaterial (22a) aufnimmt, eingeleitet wird, begrenzt wird.

3. Verbrennungssteuerungsverfahren für einen regenerativ verbrennenden Wärmebehandlungsofen gemäß Anspruch 1, wobei in Verbindung mit dem Ausführen des Einleitens des Verbrennungsabgases in den Regenerator (22), der das Wärmespeicherungsmaterial (22a) aufnimmt, und des es dem Wärmespeicherungsmaterial (22a) Ermöglichen, die Wärme von dem Verbrennungsabgas vor dem Auslassen des Verbrennungsabgases zu speichern, selbst während des Verbrennungsstopps, die Menge an Verbrennungsabgasen, die in den Regenerator (22), der das Wärmespeicherungsmaterial (22a) aufnimmt, eingeleitet wird, entsprechend dem Druck in dem Wärmebehandlungsofen gesteuert wird.

## Revendications

1. Procédé de commande de combustion pour un four de traitement thermique à combustion à régénération (10) qui est pourvu de plusieurs paires de brûleurs à régénération (20) agencés dans une direction de déplacement d'un matériau objet (1) dans le four de traitement thermique (10), le brûleur à régénération (20) comprenant une partie de brûleur (21) équipée d'une buse d'injection de combustible et d'un régénérateur (22) contenant un matériau accumulateur de chaleur (22a) dans celui-ci, et dans lequel chaque paire (20a, 20b) de brûleurs à régénération (20) alterne entre des fonctionnements d'une manière telle qu'un brûleur à régénération (20) de la paire effectue une combustion en introduisant de l'air de combustion vers la partie de brûleur (21) par l'intermédiaire du régénérateur (22) et en injectant un combustible gazeux à partir de la buse d'injection de combustible de ce brûleur, alors que l'autre brûleur à régénération (20) introduit un gaz d'échappement de combustion dans le régénérateur (22) contenant le matériau accumulateur de chaleur (22a) et permet au matériau accumulateur de chaleur d'accumuler la chaleur provenant du gaz d'échappement de combustion avant de décharger le gaz d'échappement de combustion,
le procédé de commande de combustion comprenant les étapes fonctionnelles suivantes lors de la commutation de ladite au moins une paire (20a, 20b) de brûleurs à régénération (20) entre une combustion et un arrêt de la combustion :
- l'introduction du gaz d'échappement de combustion dans le régénérateur (22) contenant le matériau accumulateur de chaleur (22a) et l'accumulation par le matériau accumulateur de chaleur (22a) de la chaleur provenant du gaz d'échappement de combustion avant de décharger le gaz d'échappement de combustion, ces étapes étant effectuées dans celui des brûleurs à régénération (20) de la paire qui effectue la combustion au redémarrage de la combustion en introduisant l'air de combustion vers le brûleur par l'intermédiaire du régénérateur (22) et en injectant le combustible gazeux à partir de la buse d'injection de combustible de ce brûleur, même lorsque la combustion dans les brûleurs de la paire de brûleurs à régénération est arrêtée,
- l'interdiction de l'introduction du gaz d'échappement de combustion dans le régénérateur (22) de l'autre brûleur (20) de la paire de brûleurs qui n'effectue pas la combustion au redémarrage de la combustion.

2. Procédé de commande de combustion pour un four de traitement thermique à combustion à régénération selon la revendication 1, dans lequel, conjointement avec l'exécution, même pendant l'arrêt de la combustion, de l'opération d'introduction du gaz d'échappement de combustion dans le régénérateur (22) contenant le matériau accumulateur de chaleur (22a) et d'accumulation par le matériau accumulateur de chaleur (22a) de la chaleur provenant du gaz d'échappement de combustion avant de décharger le gaz d'échappement de combustion, la quantité de gaz d'échappement de combustion introduite dans le régénérateur (22) contenant le matériau accumulateur de chaleur (22a) est limitée.

3. Procédé de commande de combustion pour un four de traitement thermique à combustion à régénération selon la revendication 1, dans lequel, conjointement avec l'exécution, même pendant l'arrêt de la combustion, de l'opération d'introduction du gaz d'échappement de combustion dans le régénérateur (22) contenant le matériau accumulateur de chaleur (22a) et d'accumulation par le matériau accumulateur de chaleur (22a) de la chaleur provenant du gaz d'échappement de combustion avant de décharger le gaz d'échappement de combustion, la quantité de gaz d'échappement de combustion introduite dans le régénérateur (22) contenant le matériau accumulateur de chaleur (22a) est commandée en fonction de la pression dans le four de traitement thermique.
